# EUROPÄISCHE PATENTSCHRIFT

(11) **EP 1 245 162 B1**
(45) Veröffentlichungstag und Bekanntmachung des Hinweises auf die Patenterteilung: **05.07.2006**
(21) Anmeldenummer: 02006889.6
(22) Anmeldetag: 26.03.2002
(51) Int. Cl.: A23L 1/304

(54) **Mittel zur Supplementation von Mineralstoffen und Spurenelementen**
Agent for supplementation of mineral and trace elements
Agent d'apport nutritionnel en minéraux et oligo-éléments

(30) Priorität: 27.03.2001 DE 10115070
(43) Veröffentlichungstag der Anmeldung: 02.10.2002
(73) Patentinhaber: Natterer, Siegfried, 92637 Weiden (DE)
(72) Erfinder: Natterer, Siegfried, 92637 Weiden (DE)
(74) Vertreter: Lang, Christian

(56) Entgegenhaltungen:
- FR-A- 2 698 268
- US-A- 5 851 578
- DATABASE FSTA [Online] INTERNATIONAL FOOD INFORMATION SERVICE (IFIS), FRANFURT/MAIN, DE; GEYER R ET AL: "Some aspects of the composition of bottled natural mineral waters: a note." Database accession no. 82-2-09-h1387 XP002208232 & FOOD TECHNOLOGY IN AUSTRALIA 1981 WATER SECTION, HEALTH COMMISSION OF NSW DIV. OF ANALYTICAL LAB., PO BOX 162, LIDCOMBE, NEW SOUTH WALES 2141, AUSTRALIA, Bd. 33, Nr. 3, Seite 94
- BELITZ; GROSCH : "Food Chemistry" 1999 , SPRINGER , BERLIN XP002208231 * Seite 918; Tabellen 23.1,23.3 * * Seite 919, Spalte 2, Absatz 3 *

## Beschreibung

Die Erfindung bezieht sich auf ein Mittel zur Supplementation von Mineralstoffen und Spurenelementen in Form von Metallen und Nichtmetallen sowie auf eine Mittel zur Entsäuerung.

Verschiedenste Präparate zur Supplementation von Mineralstoffen und Spurenelementen sind auf dem Markt erhältlich, insbesondere auch als sogenannte Nahrungsergänzungsmittel (Food-Supplements) zur Vorbeugung oder Behebung von Mangelerscheinungen und damit zur Vorbeugung und Behebung von Krankheiten.

So ist beispielsweise ein Präparat als Pulver, Flüssigkeitskonzentrat oder Fertiggetränk bekannt (US-A-5,851,578), welches (Präparat) Carbonate, Mineralstoffe, Zucker, organische und anorganische Säuren und Vitamine enthält, wobei letztere, sofern nicht wasserlöslich auch in Form von Phospholipid-Liposomen zugemischt werden können. Bekannt sind weiterhin Präparate in Form von Kapseln, Tabletten, Fertiggetränken oder Emulsionen (FR-A-2698268), die Kupfer-Salze (Zitrat, Carbonat), Vitamine, Säuren und andere Mineralstoffe enthalten.

Aufgabe der Erfindung ist es, ein Mittel aufzuzeigen, welches in besonders wirksamer und verträglicher Weise eine Supplementation von Mineralstoffen und Schwermetallen ermöglicht. Ein Mittel zur Supplementation von Mineralstoffen und Spurenelementen ist entsprechend dem Patentanspruch 1 ausgebildet.

Das erfindungsgemäße Mittel für die Supplementation von Mineralstoffen und Schwermetallen besteht aus zwei getrennten Komponenten, nämlich aus einer basischen Komponente und einer sauren Komponente.

Das erfindungsgemäße Mittel eignet sich beispielsweise zur oralen Einnahme, und zwar beide Komponenten jeweils in flüssiger Form bzw. als verdünnte trinkfertige Lösung in separaten Behältern oder aber portioniert in separaten und vorzugsweise z.B. durch Farbe und/oder Form unterschiedlich gekennzeichneten Kapseln oder aber in Kombi-Kapseln, die dann beide Komponenten in getrennten Kammern enthalten.

Die Anwendung des Mittels erfolgt dann so, daß zunächst die basische Komponente und zeitlich danach die saure Komponente eingenommen werden. Liegt eine Darreichungsform in Kapseln vor, so sind die Kapseln so ausgeführt, daß sich die Kapsel für die basische Komponente oder aber der Bereich einer Kombi-Kapsel, in der die basische Komponente aufgenommen ist, sich nach Einnahme schneller auflösen als die entsprechende Kapsel oder der entsprechende Teil einer Kombikapsel für die saure Komponente. Zur Verbesserung der Anwendung können eine oder auch beide Komponenten als Gel formuliert sein.

Das erfindungsgemäße Mittel ist weiterhin u.a. für eine dermale oder transdermale Anwendung geeignet. Beide Komponenten können hierbei jeweils als Salbe, Gel, Lotion, Suspension usw. formuliert sein. Für diese dermale und transdermale Anwendung besteht weiterhin auch die Möglichkeit, die Komponenten in einem gemeinsamen Präparat vorzusehen, und zwar dadurch, daß eine Komponente gekapselt, z.B. in Liposomen eingebettet und mit Fett umschlossen vorliegt, während die andere Komponente ungekapselt z.B. in wässriger Lösung oder in einer entsprechenden Suspension enthalten ist.

Im Einzelnen enthält die basische Komponente Carbonat und/oder Phosphat sowie Hydroxid in Mischung, und zwar wenigstens eines Elementes der Gruppe Calcium, Kalium, Magnesium, Natrium, Barium, Zink, wobei der pH-Wert dieser basischen Komponente (auch trinkfertige Lösung) auf einen Wert größer als 8,5, beispielsweise größer als 9, bevorzugt zwischen 9, 2 und 9,6 eingestellt ist. Zur Einstellung des pH-Wertes eignet sich neben Hydroxiden insbesondere auch Kaliumcarbonat. Auch Naturstoffe können für die basische Komponente verwendet werden, z.B. Muschelkalk.

Bevorzugt enthält die basische Komponente bezogen auf die Gesamtmenge der wässrigen Lösung 10% Carbonat und 10% Hydroxid, wobei bei der oralen Anwendung die trinkfertige Lösung etwa 0,2 bis 3% oder etwa 0,2 bis 5% dieser basischen Komponente enthält, Rest beispielsweise destilliertes Wasser (Aqua bidestillata nach DAB10).

Bei der dermalen oder transdermalen Anwendung erfolgt eine ähnliche Verdünnung der basischen Komponente in dem jeweils für die Anwendungsform verwendeten Matrix- oder Trägermaterial.

Die basische Komponente kann weiterhin auch ein Fruchtsalz enthalten, welches in Verbindung mit dem Hydroxid zu einer Steigerung des angestrebten Effektes führt.

Der Erfindung liegt die Erkenntnis zugrunde, daß mit der basischen Komponente, d.h. mit dem basischen Milieu eine besonders wirksame Supplementation von Calcium, Magnesium, Natrium, Barium und/oder Zink möglich ist.

Die saure Komponente enthält in wässriger Lösung eine Säure und außerdem wenigstens ein Spurenelement aus der Gruppe Eisen, Kupfer, Mangan, Chrom, Molybdän und/oder Vanadium, wobei durch eine entsprechende Zugabe der Säure der pH-Wert auf einen Wert kleiner 5,0 eingestellt wird.

Die Anteile der vorgenannten Spurenelemente sind z.B. zusätzlich zu Wasser und Säure in einem solchen Anteil gewählt, daß sich der pH-Wert kleiner 5,0 ergibt.

Der Erfindung liegt dabei die Erkenntnis zugrunde, daß eine besonders wirksame Supplementation von Eisen, Kupfer, Mangan, Chrom, Molybdän und/oder Vanadium im sauren Milieu erreichen läßt.

Durch die Verwendung beider Komponenten erfolgt im Körper eine Neutralisierung. Auf jeden Fall wird auch eine Übersäuerung sowie eine Unverträglichkeit verhindert, wie sie bei einer Magentherapie alleine auftreten könnte.

Als Säure für die saure Komponente wird bevorzugt eine organische Säure verwendet, die den Vorteil hat, daß sie bzw. deren Bestandteile, beispielsweise die CO2 Bestandteile durch Stoffwechsel über die Atmung abgebaut werden, und zwar im Gegensatz zu fixen Säuren, die über die Nieren ausgeschieden werden müssen und daher eine zusätzliche renale Belastung darstellen. Grundsätzlich können aber auch anorganische Säuren verwendet werden.

Bevorzugt enthält die saure Komponente auch Zucker. Durch diesen Zusatz erhöht sich zum einen bei Verwendung von Eisen die Löslichkeit dieses Bestandteiles. Weiterhin werden die Resorption und Verträglichkeit der sauren Komponente insbesondere auch bei einer oralen Verabreichung verbessert. Der Zusatz von Zucker erhöht darüber hinaus die Stabilität der sauren Komponente bzw. der entsprechenden Lösung insbesondere gegen Ausfällung.

Bei einer bevorzugten Ausführungsform der Erfindung erhält die basische Komponente als Carbonat Natriumcarbonat und als Hydroxid Natriumhydroxid. Hierbei weist die basische Komponente vorzugsweise folgende Zusammensetzung auf:
10% Natriumcarbonat,
10% Natriumhydroxid,
Zink, Calzium Kalium, Magnesium als zusätzliche Mineralstoffe und Spurenelemente,
Harnstoff,
Cortison,
sowie vorzugsweise Vitamine, insbesondere einen Vitamin B-Komplex.

Der Anwendungsbereich des erfindungsgemäßen Mittels ist breit gefächert und liegt generell dort, wo eine Supplementation von Mineralstoffen und Spurenelementen gewünscht bzw. notwendig ist. Typische Anwendungen sind beispielsweise bei chronischer Bindegewebsazidose, Rheuma, Arthrose, Osteoporose, Thromboseneigung, Schlafstörungen, nervöse Erschöpfungszustände, Bluthochdruck, Depressionen, Diabetes, Nierenfunktionsstörungen, Leberfunktionsstörungen, Dysbiose des Darms, Mykosen, Allergien aller Art, Astma bronchiale, Hauterkrankungen, Haarausfall, Varicosis, Psoriasis, Neurodermitis.

Grundsätzlich gehen die typischen Zivilisationskrankheiten und die meisten chronischen Erkrankungen mit einer Azidose einher, weshalb in solchen Fällen eine systematische Entsäuerung die Basistherapie ist. Auch wenn noch kein spezifisches Krankheitsbild vorliegt, besteht in den meisten Fällen eine latente, therapiebedürftige Übersäuerung. Die oben aufgeführten Erkrankungen stellen somit naturgemäß nur einen Ausschnitt des Anwendungsspektrums dar.

### Topische Anwendung:

Trockene Haut, Psoriasis, Neurodermitis, Windeldermatitis, Soor, Pilzerkrankungen, chronische, schlechtheilende Wunden (z.B. Ulcus cruris), Diabetische Ulcera, Erkrankungen des rheumatischen Formenkreises (äußerlich Rheuma- und Gelenksalbe als unterstützende Maßnahme zur inneren Therapie).

Auch viele Hauterkrankungen gehen mit einer systemischen Übersäuerung einher, welche in der Regel sowohl psychisch als auch durch Ernährungsfehler verursacht wird. Einerseits ist die Haut durch die von der Säurewirkung direkt induzierten, pathologisch gesteigerten Trophik betroffen welche mit einer übermäßigen Ausschüttung von Entzündungs-Mediatoren einhergeht. Andererseits vermuten manche Autoren eine vermehrte Ausscheidung über die Haut ("3.Niere") zur Unterstützung der überlastenden Ausscheidungsorgane.

## Patentansprüche

1. Mittel zur Supplementation von Mineralstoffen und/oder Spurenelementen im menschlichen oder tierischen Körper, **gekennzeichnet durch** eine basische Komponente und eine von dieser getrennten saure Komponente,
wobei die basische Komponente in wässriger Lösung wenigstens ein Carbonat und/oder Phosphat sowie ein Hydroxid oder Hydroxidcarbonat wenigstens eines Elementes aus der Gruppe Calcium, Magnesium, Natrium, Kalium, Barium und/oder Zink enthält und der pH-Wert der basischen Komponente auf einen Wert größer 8,5, beispielsweise größer als 9 eingestellt ist, und
wobei die saure Komponente in wässriger Lösung wenigstens ein Spurenelement der Gruppe Eisen, Kupfer, Mangan, Chrom, Molybdän und/oder Vanadium sowie wenigstens eine Säure enthält und der pH-Wert der sauren Komponente auf einen Wert kleiner 5,0 eingestellt ist.

2. Mittel nach Anspruch 1, **dadurch gekennzeichnet, daß** der Anteil an Hydroxid maximal 10 Gewichtsprozent, beispielsweise etwa 0 bis 1 Gewichtsprozent, jeweils bezogen auf 100 Gewichtsprozent der basischen Komponente beträgt.

3. Mittel nach Anspruch 1 oder 2, **dadurch gekennzeichnet, daß** die basische Komponente als Carbonat Natriumcarbonat und/oder Kaliumcarbonat und/oder als Hydroxid Natriumhydroxid und/oder Kaliumhydroxid und/oder Calciumhydroxid enthält.

4. Mittel nach einem der vorhergehenden Ansprüche, **dadurch gekennzeichnet, daß** die basische Komponente zusätzlich zu Carbonat und Hydroxid ein Fruchtsalz enthält.

5. Mittel nach einem der vorhergehenden Ansprüche, **dadurch gekennzeichnet, daß** die basische Komponente zusätzlich Mineralstoffe und Spurenelemente und/oder Harnstoff und/oder Cortison und/oder Vitamine, insbesondere einen Vitamin B-Komplex enthält.

6. Mittel nach einem der vorhergehenden Ansprüche, **dadurch gekennzeichnet, daß** die saure Komponente als Säure eine organische Säure enthält.

7. Mittel nach einem der vorhergehenden Ansprüche, **dadurch gekennzeichnet, daß** die saure Komponente als Säure eine anorganische Säure enthält.

8. Mittel nach einem der vorhergehenden Ansprüche, **dadurch gekennzeichnet, daß** die saure Komponente als weiteren Zusatz Zucker enthält.

9. Mittel nach einem der vorhergehenden Ansprüche, **dadurch gekennzeichnet, daß** die basische Komponente und die saure Komponente jeweils als trinkfertige Lösungen für eine orale Anwendung sind, und zwar beispielsweise jeweils mit einem Anteil von etwa 0,2 bis 5% der basischen Komponente und/oder der sauren Komponente auf 100% trinkfertiger Lösung.

10. Mittel nach einem der vorhergehenden Ansprüche, **dadurch gekennzeichnet,**
**daß** die basische Komponente und/oder die saure Komponente als Gel, Dispersion, Emulsion, Creme, Salbe formuliert sind, oder
**daß** basischen und/oder sauren Komponente getrennt in Kapseln oder Suppositorien vorgesehen sind, oder
**daß** die basische Komponente oder die saure Komponente mikro-gekapselt, z.B. in Liposomen und/oder Fett eingebettet ist und die andere Komponente in einer nicht gekapselten Form vorliegt.

## Claims

1. Preparation for the supplementation of mineral substances and/or trace elements in the human or animal body, **characterised by** a basic component and an acid component which is separate therefrom wherein the basic component contains in an aqueous solution at least one carbonate and/or phosphate as well as a hydroxide or hydroxide carbonate of at least one element of the group calcium, magnesium, sodium, potassium, barium and/or zinc and the pH-value of the basic component is set to a value greater than 8.5, by way of example greater than 9, and wherein the acid component contains in an aqueous solution at least one trace element of the group iron, copper, manganese, chromium, molybdenum and/or vanadium as well as at least one acid and the pH-value of the acid component is set to a value less than 5,0.

2. Preparation according to claim 1 **characterised in that** the proportion of hydroxide amounts to a maximum of 10 percent by weight, by way of example about 0 to 1 percent by weight, each in relation to 100 percent by weight of the basic component.

3. Preparation according to claim 1 or 2 **characterised in that** the basic component contains as carbonate sodium carbonate and/or potassium carbonate and/or as hydroxide sodium hydroxide and/or potassium hydroxide and/or calcium hydroxide.

4. Preparation according to one of the preceding claims **characterised in that** the basic component contains in addition to the carbonate and hydroxide also a fruit salt.

5. Preparation according to one of the preceding claims **characterised in that** the basic component contains additionally mineral substances and trace elements and/or urea and/or cortisone and/or vitamins, more particularly a vitamin B coxnplex.

6. Preparation according to one of the preceding claims **characterised in that** the acid component contains as acid an organic acid.

7. Preparation according to one of the preceding claims **characterised in that** the acid component contains as acid an inorganic acid.

8. Preparation according to one of the preceding claims **characterised in that** the acid component contains as a further additive sugar.

9. Preparation according to one of the preceding claims **characterised in that** the basic component and the acid component are each formed as ready-to-drink solutions for oral application, namely by way of example each with a proportion of about 0.1 to 5% of the basic component and/or the acid component to the 100% ready-to-drink solution.

10. Preparation according to one of the preceding claims **characterised in that** the basic component and/or the acid component are formulated as a gel, dispersion, emulsion, crème, ointment, or that the basic and/or acid components are provided separately in capsules or suppositories, or that the basic component or the acid component is micro-capsulated, e.g. embedded in liposome and/or fat and the other component is provided in a non-capsulated form.

## Revendications

1. Produit d'apport de matières minérales et/ou d'oligo-éléments dans un corps humain ou animal, **caractérisé par** un composant basique et un composant acide séparé de ce dernier, le composant basique contenant en solution aqueuse au moins un carbonate et/ou phosphate ainsi qu'un hydroxyde ou bicarbonate d'au moins un élément du groupe du calcium, du magnésium, du sodium, du potassium, du baryum et/ou du zinc, la valeur de pH du composant basique étant ajustée à une valeur supérieure à 8,5, par exemple supérieure à 9, le composant acide contenant en solution aqueuse au moins un oligo-élément du groupe du fer, du cuivre, du manganèse, du chrome, du molybdène et/ou du vanadium ainsi qu'au moins un acide, la valeur de pH du composant acide étant ajustée à une valeur inférieure à 5,0.

2. Produit suivant la revendication 1, **caractérisé en ce que** la fraction en hydroxyde est au maximum de 10 % en poids, par exemple d'environ 0 à 1 % en poids, par rapport à 100 % en poids du composant basique.

3. Produit suivant la revendication 1 ou 2, **caractérisé en ce que** le composant basique contient, comme carbonate, du carbonate de sodium et/ou du carbonate de potassium et/ou, comme hydroxyde, de l'hydroxyde de sodium et/ou de l'hydroxyde de potassium et/ou de l'hydroxyde de calcium.

4. Produit suivant l'une des revendications précédentes, **caractérisé en ce que** le composant basique contient en supplément au carbonate et à l'hydroxyde un sel de fruit.

5. Produit suivant l'une des revendications précédentes, **caractérisé en ce que** le composant basique contient en supplément des matières minérales et des oligo-éléments et/ou de l'urée et/ou de la cortisone et/ou des vitamines, en particulier un complexe de vitamine B.

6. Produit suivant l'une des revendications précédentes, **caractérisé en ce que** le composant acide contient, comme acide, un acide organique.

7. Produit suivant l'une des revendications précédentes, **caractérisé en ce que** le composant acide contient, comme acide, un acide inorganique.

8. Produit suivant l'une des revendications précédentes, **caractérisé en ce que** le composant acide contient, comme autre additif, du sucre.

9. Produit suivant l'une des revendications précédentes, **caractérisé en ce que** le composant basique et le composant acide sont chacun sous la forme de solutions buvables destinées à une application orale, et cela par exemple respectivement avec une fraction d'environ 0,2 à 5 % du composant basique et/ou du composant acide pour 100 % de solution buvable.

10. Produit suivant l'une des revendications précédentes, **caractérisé en ce que** le composant basique et/ou le composant acide sont formulés sous la forme de gel, dispersion, émulsion, crème, pommade, ou
**en ce que** les composants basiques et/ou acides sont prévus sous une forme séparée dans des capsules ou suppositoires, ou
**en ce que** le composant basique ou le composant acide est microencapsulé, en étant par exemple noyé dans des liposomes et/ou de la graisse, et l'autre composant se présente sous une forme non encapsulée.
